# FASCICULE DE BREVET EUROPEEN

(11) **EP 1 800 236 B1**
(45) Date de publication et mention de la délivrance du brevet: **24.06.2009**
(21) Numéro de dépôt: 05800231.2
(22) Date de dépôt: 23.09.2005
(51) Int. Cl.: G06K 7/14, G06K 7/08

(54) **DISPOSITIF DE TENUE D'UNE TETE DE LECTURE MAGNETIQUE**
EINRICHTUNG ZUM HALTEN EINES MAGNETLESEKOPFS
DEVICE FOR HOLDING A MAGNETIC READING HEAD

(30) Priorité: 23.09.2004 FR 0452135
(43) Date de publication de la demande: 27.06.2007
(73) Titulaire: Ingenico France, 92200 Neuilly Sur Seine (FR)
(72) Inventeur: DUBOIS, Eric, F-26120 MONTVENDRE (FR)
(74) Mandataire: de Beaumont, Michel
(86) Numéro de dépôt international: PCT/FR2005/050773
(87) Numéro de publication internationale: WO 2006/032824

(56) Documents cités:
- GB-A- 2 297 417
- US-A- 4 628 386
- US-A- 5 552 947

## Description

### Domaine de l'invention

La présente invention concerne un dispositif de tenue d'une tête de lecture magnétique. Plus précisément, la présente invention concerne un dispositif de tenue d'un boîtier d'une tête de lecture magnétique pour un lecteur de cartes magnétiques à fente (correspondant à l'expression anglaise "swipe reader"), le passage d'une carte magnétique dans la fente du lecteur étant réalisé de façon manuelle ou motorisée.

### Exposé de l'art antérieur

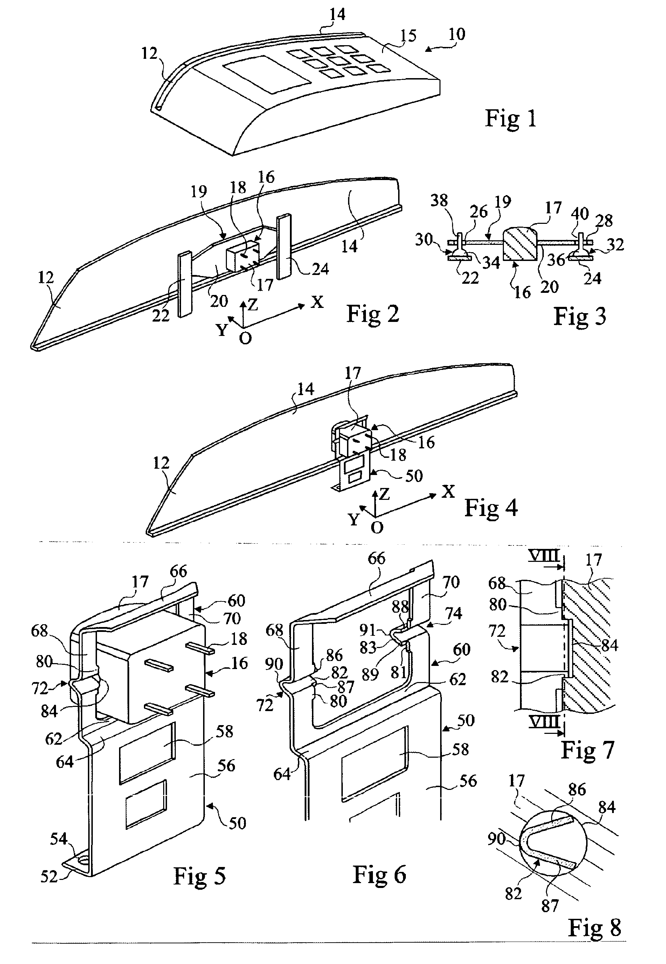

La figure 1 représente, de façon schématique, un exemple de lecteur 10 de carte magnétique classique. Le lecteur 10 comprend une fente latérale 12 dans laquelle un utilisateur peut faire coulisser une carte magnétique (non représentée). La fente 12 est délimitée par un bord latéral 14 du lecteur 10 et par le corps du lecteur 15.

La figure 2 représente, de façon schématique, certains composants internes du lecteur 10 de la figure 1. La lecture de données stockées sur la carte magnétique est réalisée par une tête de lecture magnétique 16 contenue dans un boîtier 17 et comportant au moins un entrefer (non visible en figure 2) placé en vis-à-vis de la fente 12. Lors du passage de la carte magnétique dans la fente 12, une bande magnétique portée par la carte magnétique défile devant l'entrefer de la tête de lecture 16 permettant la lecture des données stockées sur la bande magnétique. Le boîtier 17 de la tête de lecture 16 comporte des bornes de connexion 18 permettant l'alimentation de la tête de lecture 16 et la transmission de signaux depuis la tête de lecture 16 vers un système de traitement de données (non représenté) du lecteur 10. Par la suite, on définit un repère orthogonal (OXYZ) dans lequel l'axe (OX) s'étend selon la direction longitudinale de la fente 12, l'axe (OY) s'étend perpendiculairement à la fente 12 et l'axe (OZ) passe par le centre de gravité du boîtier 17 de la tête de lecture 16. La tenue du boîtier 17 de la tête de lecture 16 est assurée par un dispositif de tenue 19 comportant une plaque de maintien élastique 20, sensiblement plane et s'étendant selon la direction (OX), à laquelle est soudé le boîtier 17 de la tête de lecture 16 et qui est maintenu aux extrémités par deux poteaux rigides 22, 24 fixés au lecteur 10.

Le dispositif de tenue 19 doit satisfaire différentes contraintes :
- le dispositif de tenue 19 doit autoriser la rotation de la tête de lecture 16 autour d'un axe parallèle à l'axe (OX) de façon à permettre la lecture d'une carte magnétique incurvée autour de l'axe (OX) ;
- le dispositif de tenue 19 doit empêcher le pivotement de la tête de lecture 16 autour de l'axe (OZ) lors du passage de la carte magnétique dans la fente 12 en raison de frottements entre la carte magnétique et le boîtier 17 de la tête de lecture 16 ; et
- le dispositif de tenue 19 doit assurer une force de contact suffisante entre le boîtier 17 de la tête de lecture 16 et la carte magnétique, ce qui se traduit, lors du passage de la carte magnétique dans la fente 12, par l'application sur le boîtier 17 de la tête de lecture 16 d'une force de rappel selon la direction (OY) qui tend à appliquer le boîtier 17 de la tête de lecture 16 contre la carte magnétique.

La figure 3 est une section du boîtier 17 de la tête de lecture 16 et du dispositif de tenue 19 selon un plan médian parallèle au plan (OXY). La plaque de maintien 20 est traversée à chaque extrémité par une ouverture cylindrique 26, 28. Sur chaque poteau rigide 22, 24 est fixé un pion 30, 32 comprenant une portion sphérique 34, 36, solidaire du poteau rigide 22, 24, prolongée par un téton cylindrique 38, 40 qui pénètre dans une ouverture cylindrique 26, 28 de la plaque 20. Un jeu est prévu entre chaque téton cylindrique 38, 40 et l'ouverture 26, 28. Lors du passage d'une carte magnétique dans la fente 12, la carte magnétique exerce une pression sur le boîtier 17 de la tête de lecture 16 qui déplace la plaque 20 contre les pions de fixation 30, 32. Le diamètre plus important des trous 26, 28 par rapport aux tétons 38, 40 et la forme sphérique des portions sphériques 34, 36 permettent une rotation de la plaque de maintien 20, et donc de la tête de lecture 16, autour d'un axe parallèle à l'axe (OX) passant par les centres des portions sphériques 34, 36 lors du passage de la carte magnétique.

La plaque 20 étant maintenue à deux extrémités dans la direction (OX), elle s'oppose à tout pivotement de la tête de lecture 16 autour de l'axe (OZ).

La plaque de maintien 20 est constituée d'un matériau élastique et fournit une force de rappel selon la direction (OY) qui s'oppose à la force exercée par une carte magnétique sur le boîtier 17 de la tête de lecture 16.

Une tendance actuelle est la réduction des dimensions des lecteurs de cartes magnétiques notamment pour la réalisation de lecteurs de cartes magnétiques portables facilement manipulables. Pour ce faire, il est souhaitable de réduire au maximum l'encombrement au niveau de la tête de lecture magnétique 16. Le dispositif de tenue 19 classique, représenté aux figures 2 et 3, présente un encombrement important selon la direction (OX) et n'est donc pas adapté aux lecteurs de cartes magnétiques de petites dimensions, notamment les lecteurs de cartes magnétiques portables.

En outre, un tel dispositif de tenue est constitué de plusieurs pièces mécaniques distinctes. Le coût de fabrication d'un tel dispositif de tenue n'est donc pas négligeable et le montage du dispositif de tenue dans le lecteur est relativement complexe.

De plus, il est nécessaire de souder le boîtier 17 de la tête de lecture 16 à la plaque de maintien 20, ce qui est une opération délicate risquant d'endommager la tête de lecture.

Le document US 4 628 386 décrit un dispositif de tenue d'un boîtier d'une tête de lecture magnétique, le boîtier étant adapté à s'incliner par rapport au dispositif de tenue autour d'un axe de rotation défini par au moins un arbre monté pivotant dans un palier, l'arbre ou le palier étant formé au niveau du boîtier.

### Résumé de l'invention

La présente invention vise à proposer un dispositif de tenue d'un boîtier d'une tête de lecture d'une carte magnétique d'un lecteur à fente permettant une inclinaison de la tête de lecture et dont l'encombrement selon la direction de passage de la carte magnétique est réduit.

Un autre objet de la présente invention est de prévoir un dispositif de tenue d'un boîtier d'une tête de lecture magnétique dont le procédé de fabrication est simple et à faible coût.

Un autre objet de la présente invention est de prévoir un dispositif de tenue d'un boîtier d'une tête de lecture magnétique dont le montage est particulièrement simple.

Pour atteindre ces objets, la présente invention prévoit un dispositif de tenue d'un boîtier d'une tête de lecture magnétique d'un lecteur selon la revendication 1.

Selon un mode de réalisation de la présente invention, le dispositif comprend une portion en saillie destinée à coopérer avec une ouverture cylindrique du boîtier.

Selon un mode de réalisation de la présente invention, la portion en saillie comprend deux branches disposées en "V" reliées par une base, les extrémités des branches et la base étant destinées à être en contact avec l'ouverture cylindrique.

Selon un mode de réalisation de la présente invention, la base est orientée vers la fente.

Selon un mode de réalisation de la présente invention, le dispositif comprend un cadre destiné à entourer le boîtier et comportant deux paliers destinés à être placés de part et d'autre du boîtier.

Selon un mode de réalisation de la présente invention, le dispositif comprend une butée, interposée entre le palier et le cadre, ladite butée étant destinée à empêcher un contact entre le boîtier et le cadre.

Selon un mode de réalisation de la présente invention, le dispositif comprend une plaque plane destinée à être fixée à une première extrémité au lecteur et reliée, à une seconde extrémité opposée à la première extrémité, au cadre.

Selon un mode de réalisation de la présente invention, la plaque et le cadre sont au moins en partie inclus dans des plans parallèles disjoints.

Selon un mode de réalisation de la présente invention, la plaque comprend au moins une ouverture.

La présente invention vise un lecteur de cartes magnétiques comportant un dispositif de tenue d'un boîtier d'une tête de lecture magnétique tel que défini précédemment.

### Brève description des dessins

Ces objets, caractéristiques et avantages, ainsi que d'autres de la présente invention seront exposés en détail dans la description suivante d'un exemple de réalisation particulier faite à titre non-limitatif en relation avec les figures jointes parmi lesquelles :
la figure 1, précédemment décrite, représente schématiquement un lecteur de cartes magnétiques ;
les figures 2 et 3, précédemment décrites, sont respectivement une vue en perspective et une section d'un dispositif de tenue classique d'un boîtier d'une tête de lecture magnétique ;
la figure 4 représente, de façon schématique, un exemple de réalisation d'un dispositif de tenue selon l'invention d'un boîtier d'une tête de lecture magnétique ;
la figure 5 est une vue agrandie du dispositif de tenue de la figure 4, la tête de lecture magnétique étant représentée ;
la figure 6 est une vue partielle similaire à la figure 5, la tête de lecture magnétique n'étant pas représentée ;
la figure 7 est une coupe partielle de la figure 5 ; et
la figure 8 est une section de la figure 7 selon la ligne VIII-VIII.

### Description détaillée

Par souci de clarté, de mêmes éléments ont été désignés par de mêmes références aux différentes figures.

La figure 4 représente un exemple de réalisation du dispositif de tenue 50 selon l'invention d'un boîtier 17 d'une tête de lecture magnétique 16.

Les figures 5 et 6 représentent, de façon plus détaillée, le dispositif de tenue 50 de la figure 4. Le dispositif de tenue 50 est constituée d'une pièce unique comprenant une embase plane 52 pouvant comporter des trous 54 (un seul trou étant représenté en figure 5) permettant la fixation de l'embase 52 au lecteur 10, par exemple, par l'intermédiaire de vis. L'embase 52 se prolonge par une plaque plane 56, de forme générale sensiblement rectangulaire, traversée par des ouvertures 58. La plaque 56 s'étend dans un plan parallèle au plan (OXZ), sensiblement selon la direction (OZ).

A son extrémité supérieure selon la direction (OZ), la plaque 56 se prolonge par un cadre 60 qui entoure le boîtier 17 de la tête de lecture 16 et qui s'étend en partie dans un plan parallèle au plan (OXZ). Le cadre 60 comprend une traverse inférieure 62, reliée à la plaque 56 par une zone de pliure 64, de sorte que le cadre 60 s'étende parallèlement à la plaque 56 dans un plan distinct du plan contenant la plaque 56. Le cadre 60 comprend, en outre, une traverse supérieure 66 et deux montants latéraux 68, 70, reliant la traverse supérieure 66 à la traverse inférieure 62. La traverse supérieure 66 est repliée par rapport au reste du cadre 60 vers le côté opposé à la fente 12.

Chaque montant latéral 68, 70 comporte, en partie médiane, une zone de renflement 72, 74, formée par trois plis successifs du montant latéral 68, 70. Les zones de renflement 72, 74 sont disposées symétriquement l'une par rapport à l'autre sur les montants latéraux 68, 70. Chaque zone de renflement 72, 74 comprend une première portion en saillie 80, 81 qui s'étend vers l'intérieur du cadre 60 et qui se prolonge par une seconde portion en saillie 82, 83. La première portion en saillie 80, 81 forme une butée contre laquelle s'arrête le boîtier 17 de la tête de lecture 16. Ceci permet d'éviter que le boîtier 17 de la tête de lecture 16 ne soit en contact avec la totalité du bord intérieur des montants latéraux 68, 70. Chaque seconde portion en saillie 82, 83 forme un arbre qui pénètre dans une ouverture cylindrique 84, formant un palier, prévue au niveau du boîtier 17 de la tête de lecture 16. Vue selon la direction (OX), chaque seconde portion en saillie 82, 83 a la forme d'un "V" comprenant deux branches 86, 87 et 88, 89 reliées par une base 90, 91 arrondie. Les axes des ouvertures cylindriques 84 sont confondus et sont parallèles à l'axe (OX).

La figure 7 est une coupe partielle de la figure 5 au niveau d'une zone de renflement 72 sensiblement dans le plan du cadre 60. A titre d'exemple, pour un lecteur de cartes magnétiques portable, la profondeur de l'ouverture 84 est de l'ordre du millimètre.

La figure 8 est une section de la figure 7 selon la ligne VIII-VIII représentant la seconde portion en saillie 82 de la zone de renflement 72. Les extrémités des branches 86, 87 et la base 90 de la seconde portion en saillie 82 sont en contact avec l'ouverture cylindrique 84 du boîtier 17 de la tête de lecture 16 et permettent la rotation de la tête de lecture 16 autour de l'axe de l'ouverture cylindrique 84. Le boîtier 17 de la tête de lecture 16 est donc en contact avec le dispositif de tenue 50, pour chaque ouverture cylindrique 84, seulement au niveau de trois zones de contact. On limite ainsi au maximum les jeux et les frottements entre le boîtier 17 de la tête de lecture 16 et le dispositif de tenue 50.

L'application d'une force de rappel sur le boîtier 17 de la tête de lecture 16 par le dispositif de tenue 50 est assurée principalement par l'intermédiaire de la plaque 56. En effet, lors du passage d'une carte magnétique dans la fente 12, la carte magnétique exerce une poussée sur le boîtier 17 de la tête de lecture 16, qui tend à déplacer le boîtier 17 sensiblement selon la direction (OY) en s'éloignant du bord 14. Ceci entraîne un fléchissement de la plaque 56 par rapport à l'embase 52 autour de l'axe (OX). En réaction, la plaque 56 exerce, sur le cadre 60, et donc sur le boîtier 17 de la tête de lecture 16, une force de rappel sensiblement selon la direction (OY) qui tend à rapprocher la tête de lecture 16 du bord 14. Le nombre, la répartition et les dimensions des ouvertures 58 permettent d'ajuster les propriétés d'élasticité de la plaque 56 et donc l'amplitude de la force de rappel exercée sur le boîtier 17 de la tête de lecture 16. De façon avantageuse, les bases 90, 91 des secondes portions en saillie 82, 83 en "V" sont orientées vers le bord latéral 14. Les forces de contact d'amplitude maximale entre le boîtier 17 et la tête de lecture 16 et le cadre 60 sont alors localisées au niveau des bases 90, 91 dont la forme arrondie assure une meilleure répartition des contraintes.

La rigidité en torsion autour de l'axe (OZ) du dispositif de tenue 50 est assurée par la forme générale du dispositif de tenue 50. En particulier, la zone de pliure 64 et la traverse supérieure repliée 68 du cadre 60 augmentent la rigidité en torsion autour de l'axe (OZ) du dispositif de tenue 50.

Selon une variante de la présente invention, la plaque 56 peut avoir une forme trapézoïdale de sorte que la base 52 a une dimension plus importante, selon la direction (OX), que la traverse inférieure 62 du cadre 60. Ceci permet d'accroître davantage la rigidité en torsion selon l'axe (OZ) du dispositif de tenue 50.

Le dispositif de tenue selon l'invention présente de nombreux avantages :

Premièrement, le fait de prévoir les paliers d'inclinaison du boîtier de la tête de lecture directement au niveau du boîtier permet de réduire la dimension maximale selon la direction (OX) du dispositif de tenue selon l'invention par rapport à un dispositif de tenue classique. On réduit ainsi l'encombrement du dispositif de tenue selon la direction (OX).

Deuxièmement, le procédé de fabrication du dispositif de tenue selon l'invention est particulièrement simple puisqu'il peut ne comprendre que des étapes successives de pliage et de découpe réalisées sur une plaque plane.

Troisièmement, le montage du dispositif de tenue selon la présente invention est particulièrement simple puisqu'il nécessite seulement la fixation de l'embase du dispositif de tenue au lecteur. De plus, le montage du boîtier de la tête de lecture dans le cadre du dispositif de tenue selon l'invention peut être réalisé par déformation temporaire du cadre pour faire pénétrer les paliers dans les ouvertures cylindriques du boîtier de la tête de lecture. On évite ainsi toute opération de soudage au niveau du boîtier de la tête de lecture.

Bien entendu, la présente invention est susceptible de diverses variantes et modifications qui apparaîtront à l'homme de l'art. En particulier, le boîtier de la tête de lecture peut comprendre, à la place des ouvertures cylindriques, des ergots qui coopèrent avec des éléments de palier de forme complémentaire prévus au niveau du dispositif de tenue et permettant l'inclinaison de la tête de lecture.

## Revendications

1. Dispositif de tenue (50) d'un boîtier (17) d'une tête de lecture magnétique (16) d'un lecteur (10) comportant une fente (12), s'étendant selon une première direction, pour le passage d'au moins une carte magnétique, le boîtier étant adapté à s'incliner par rapport au dispositif de tenue autour d'un axe de rotation parallèle à la première direction et défini par au moins un arbre (82, 83) monté pivotant dans un palier (84), l'arbre ou le palier étant formé au niveau du boîtier, **caractérisé en ce que** le dispositif de tenue est constitué d'une pièce unique susceptible de fléchir par rapport à un axe parallèle audit axe de rotation pour appliquer une force de rappel sur le boîtier selon une deuxième direction perpendiculaire à la fente, le dispositif de tenue étant en outre rigide autour d'un axe perpendiculaire aux première et deuxième directions.

2. Dispositif selon la revendication 1, comprenant une portion en saillie (82, 83) destinée à coopérer avec une ouverture cylindrique (84) du boîtier (17).

3. Dispositif selon la revendication 2, dans lequel la portion en saillie (82, 83) comprend deux branches (86, 87, 88, 89) disposées en "V" reliées par une base (90, 91), les extrémités des branches et la base étant destinées à être en contact avec l'ouverture cylindrique (84).

4. Dispositif selon la revendication 3, dans lequel la base (76) est orientée vers la fente (12).

5. Dispositif selon la revendication 1, comprenant un cadre (60) destiné à entourer le boîtier (17) et comportant deux portions en saillie (82, 83) destinées à être placées de part et d'autre du boîtier.

6. Dispositif selon la revendication 5, comprenant une butée (80), interposée entre la portion en saillie (82, 83) et le cadre (60), ladite butée étant destinée à empêcher un contact entre le boîtier (17) et le cadre.

7. Dispositif selon la revendication 5, comprenant une plaque plane (56) destinée à être fixée à une première extrémité au lecteur (10) et reliée, à une seconde extrémité opposée à la première extrémité, au cadre (60).

8. Dispositif selon la revendication 7, dans lequel la plaque (56) et le cadre (60) sont au moins en partie inclus dans des plans parallèles disjoints.

9. Dispositif selon la revendication 7, dans lequel la plaque (56) comprend au moins une ouverture (58).

10. Lecteur (10) de cartes magnétiques comportant un dispositif de tenue (50) d'un boîtier (17) d'une tête de lecture magnétique (16) selon la revendication 1.

## Claims

1. A device (50) for holding a case (17) of a magnetic read head (16) of a reader (10) comprising a slot (12) extending in a first direction for the swiping of at least one magnetic card, wherein the case is capable of inclining with respect to the hold device around a rotation axis parallel to the first direction defined by at least one shaft (82, 83) pivotally assembled in a bearing (84), the shaft or the bearing being formed at the case level, **characterized in that** the holding device is formed of a single part capable of bending around an axis parallel to said rotation axis, for applying a return force on the case according to a second direction orthogonal to the slot, the holding device further being rigid around an axis orthogonal to the first and second directions.

2. The device of claim 1, comprising a protruding portion (82, 83) intended to cooperate with a cylindrical opening (84) of the case (17).

3. The device of claim 2, wherein the protruding portion (82, 83) comprises two branches (86, 87, 88, 89) arranged in a "V" connected by a base (90, 91), the ends of the branches and the base being intended to be in contact with the cylindrical opening (84).

4. The device of claim 3, wherein the base (76) is oriented towards the slot (12).

5. The device of claim 1, comprising a frame (60) intended to surround the case (17) and comprising two protruding portions (82, 83) intended to be placed on either side of the case.

6. The device of claim 5, comprising a stop (80), interposed between the protruding portions (82, 83) and the frame (60), said stop being intended to prevent a contact between the case (17) and the frame.

7. The device of claim 5, comprising a planar plate (56) intended to be attached at a first end to the reader (10) and connected, at a second end opposite to the first end, to the frame (60).

8. The device of claim 7, wherein the plate (56) and the frame (60) are at least partly comprised in disjoint parallel planes.

9. The device of claim 7, wherein the plate (56) comprises at least one opening (58).

10. A magnetic card reader (10) comprising the device (50) for holding a case (17) of a magnetic read head (16) of claim 1.

## Patentansprüche

1. Vorrichtung (50) zum Halten eines Gehäuses (17) eines Magnetlesekopfes (16) eines Lesers (10), das einen sich in einer ersten Richtung erstreckenden Schlitz (12) zum Hindurchziehen wenigstens einer Magnetkarte besitzt, wobei das Gehäuse in der Lage ist bezüglich der Haltevorrichtung um eine Rotationsachse parallel zur ersten Richtung geneigt zu werden, wobei die Rotationsachse definiert wird durch wenigstens eine Welle (82, 83), die schwenkbar in einem Lager (84) aufgenommen ist, wobei die Welle oder das Lager auf der Höhe des Gehäuses ausgebildet ist, **dadurch gekennzeichnet, dass** die Haltevorrichtung als ein einzelnes Teil ausgebildet ist, das in der Lage ist, sich um eine Achse parallel zu der Rotationsachse zu biegen zum Anlegen einer Rückstellkraft an das Gehäuse, und zwar in einer zweiten Richtung orthogonal zu dem Schlitz, wobei die Haltevorrichtung ferner um eine Achse orthogonal zu den ersten und zweiten Richtungen starr ist.

2. Vorrichtung nach Anspruch 1, die ferner einen Vorsprungsteil (82, 83) aufweist, der vorgesehen ist zum Zusammenwirken mit einer zylindrischen Öffnung (84) des Gehäuses (17).

3. Vorrichtung nach Anspruch 2, wobei der vorstehende Teil (82, 83) zwei Zweige (86, 87, 88, 89), die in einem "V" durch eine Basis (90, 91) verbunden sind, wobei die Enden der Zweige und die Basis vorgesehen sind, um in Kontakt mit der zylindrischen Öffnung (84) zu stehen.

4. Vorrichtung nach Anspruch 3, wobei die Basis (76) zu dem Schlitz (12) gerichtet ist.

5. Vorrichtung nach Anspruch 1, die ferner einen Rahmen (60) aufweist, der vorgesehen ist, um das Gehäuse (17) zu umgeben, und der zwei vorragende Teile (82, 83) aufweist, die auf jeder Seite des Gehäuses platziert werden soll.

6. Vorrichtung nach Anspruch 5, die einen Anschlag (80) aufweist, der zwischen den vorragenden Teilen (82, 83) und dem Rahmen (60) angeordnet ist, wobei der Anschlag vorgesehen ist, um einen Kontakt zwischen dem Gehäuse (17) und dem Rahmen zu verhindern.

7. Vorrichtung nach Anspruch 5, die eine planare Platte (56) aufweist, die vorgesehen ist zur Befestigung an einem ersten Ende des Lesers (10) und zur Verbindung an einem zweiten Ende, das dem ersten Ende entgegengesetzt ist, mit dem Rahmen (60).

8. Vorrichtung nach Anspruch 7, wobei die Platte (56) und der Rahmen (60) wenigstens teilweise in nicht zusammenhängenden parallelen Ebenen aufgenommen sind.

9. Vorrichtung nach Anspruch 7, wobei die Platte (56) wenigstens eine Öffnung (58) aufweist.

10. Magnetkartenleser (10), der eine Vorrichtung (50) zum Halten eines Gehäuses (17) eines Magnetlesekopfes (16) nach Anspruch 1 aufweist.
